Europäisches Patentamt

European Patent Office

Office européen des brevets

(19)

(11) Numéro de publication: **0 139 561**
**B1**

(12) **FASCICULE DE BREVET EUROPEEN**

(45) Date de publication du fascicule du brevet:
**20.11.86**

(21) Numéro de dépôt: **84401792.1**

(22) Date de dépôt: **11.09.84**

(51) Int. Cl.⁴: **B 60 P 1/08,** B 62 D 63/06

(54) **Remorque basculante à diverses positions par poussée en marche arrière.**

(30) Priorité: **12.09.83 FR 8314590**

(43) Date de publication de la demande:
**02.05.85 Bulletin 85/18**

(45) Mention de la délivrance du brevet:
**20.11.86 Bulletin 86/47**

(84) Etats contractants désignés:
**BE CH DE GB IT LI LU NL**

(56) Documents cités:
**GB - A - 690 579**
**US - A - 2 941 813**
**US - A - 3 985 253**

(73) Titulaire: **Fortin, Jean-Louis Charles Joseph, 9, rue
Picard, F-52410 Eurville Bienville Haute-Marne (FR)**

(72) Inventeur: **Fortin, Jean-Louis Charles Joseph, 9, rue
Picard, F-52410 Eurville Bienville Haute-Marne (FR)**

(74) Mandataire: **Chevallier, Robert Marie Georges, Cabinet
BOETTCHER 23, rue La Boétie, F-75008 Paris (FR)**

ACTORUM AG

## Description

L'invention a pour objet une remorque munie de moyens de basculement permettant de lui donner plusieurs positions différentes afin de la vider ou de l'utiliser comme table, comme établi, comme échafaudage, etc., en employant comme seule source d'énergie la poussée en marche arrière du véhicule tracteur.

Actuellement, tous les principes appliqués aux bennes basculantes les plus utilisées font appel aux principes hydrauliques ou à treuil, systèmes beaucoup plus onéreux et contraignants, d'une part par leur poids, et d'autre part par leur mise en service sur des remorques de petites et moyennes charges. L'idée d'employer l'énergie du véhicule tracteur, en marche arrière, n'est pas nouvelle, mais n'a jusqu'alors présenté autant d'avantages. Parmi ceux-ci, un des principaux est le fait que ce système de basculement peut être adapté aux techniques existantes de fabrication, quel que soit le système de suspension et de freinage employé.

On connaît par le document GB-A-690 579 une remorque dans laquelle les roues sont montées sous un coulisseau qui est déplaçable par glissement sous le plateau de cette remorque dans le sens longitudinal de celle-ci; la flèche de cette remorque est articulée par rapport au coulisseau et il existe un crochet de blocage servant à neutraliser cette articulation quand on le désire. Selon ce document, la poussée en marche arrière du véhicule tracteur permet de faire basculer le plateau vers l'arrière jusqu'à une position où il est totalement vertical.

L'invention a pour but principal d'apporter un perfectionnement notable à la remorque décrite dans ce document pour qu'elle puisse servir à d'autres utilisations.

On atteint ce but avec une remorque à roues ayant un plateau, une flèche réunie au plateau, un châssis reliant les roues au plateau, dans laquelle la flèche est articulée autour d'un axe horizontal qui est parallèle à un axe transversal passant par les roues et qui est monté coulissant par rapport au plateau dans le sens longitudinal de ce dernier, cette flèche étant pourvue d'un crochet de blocage, dans laquelle selon l'invention le châssis comprend au moins une bielle et des éléments de châssis espacés en sens transversal, la bielle étant articulée par une première extrémité avec la flèche autour de l'axe horizontal et par sa seconde extrémité avec lesdits éléments de châssis autour d'un axe transversal parallèle à l'axe horizontal d'articulation de la flèche avec la bielle, ces éléments de châssis s'étendant entre un essieu passant par les roues et la partie extrême arrière du plateau et étant articulés à la fois d'une part autour dudit essieu et d'autre part autour d'un axe transversal à leur jonction avec le plateau.

Selon un mode de réalisation, lesdits éléments de châssis sont articulés autour d'un même essieu passant par les roues et l'axe transversal d'articulation de la bielle avec lesdits éléments de châssis est distinct de cet essieu et s'étend entre les éléments de châssis.

Selon un autre mode de réalisation, l'essieu passant par les roues et l'axe transversal d'articulation de la bielle avec lesdits éléments de châssis sont confondus et cet essieu constitue aussi ledit axe transversal.

Quand les roues sont des roues indépendantes sans essieu commun, l'axe transversal d'articulation de la bielle avec lesdits éléments de châssis s'étend entre ces derniers en dehors de l'axe géométrique passant par le centre des roues.

De préférence, les éléments de châssis sont munis à proximité de l'axe d'articulation transversal avec le plateau de blocs arrière destinés à reposer sur le sol quand le plateau est mis en position de basculement substantiellement verticale.

En outre, la course de coulissement de l'axe horizontal coulissant est telle qu'elle comprend un point où le plateau est soulevé sensiblement en position horizontale au-dessus du sol par les roues se trouvant dans sa partie arrière et il existe dans la partie avant du plateau au moins un pied amovible ou escamotable destiné à soutenir ladite partie avant du plateau.

On donnera maintenant une description d'un exemple de réalisation en se reportant aux dessins annexés dans lesquels:

— la figure 1 est une représentation schématique en élévation d'une remorque selon l'invention en cours de basculement,

— les figures 2 à 6 sont des vues en élévation d'une remorque réelle conforme à l'invention représentée à diverses positions successives obtenues par la poussée d'un véhicule tracteur.

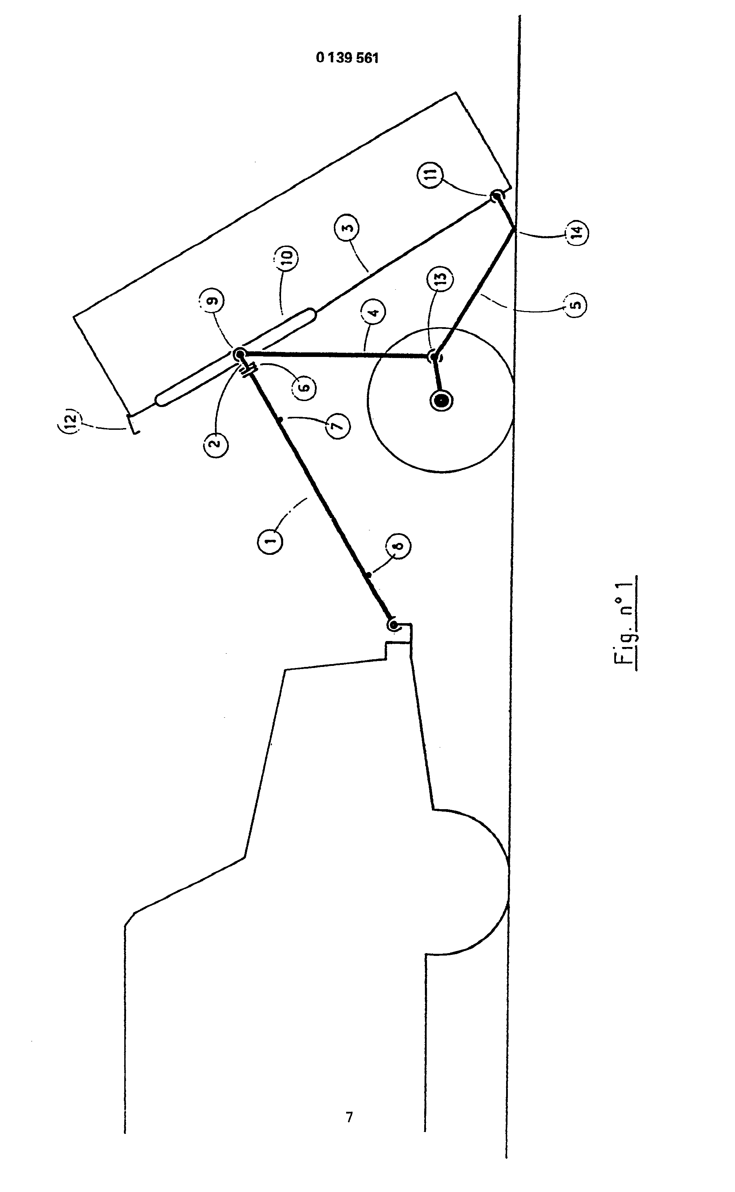

Selon un mode de réalisation préféré, le moyen de basculement se compose de cinq éléments principaux, dont voici les caractéristiques, en référence à la figure 1 annexée, constituant une représentation schématique du dispositif.

La flèche 1 est réalisée de façon à résister à la traction de la remorque et à la poussée nécessaire au basculement de la benne. Elle possède à son extrémité avant une attache standard (type rotule ou anneau, avec ou sans frein d'inertie), à l'autre extrémité, une chape dont l'axe 6 vertical se fixe sur l'articulation coulissante 2. Elle a, disposés sur sa longueur, au moins deux points 7 et 8 d'accrochage avec le plateau 3; un pour la position route et un pour l'adaptation en table. Elle permet la fixation du câble électrique et du câble (ou du tuyau) de freinage, et peut être équipée d'une béquille.

L'articulation coulissante 2 est le lien entre trois éléments: la flèche 1, le plateau 3 et au moins une bielle 4. Elle est articulée avec la flèche suvant un axe vertical 6, et sur la bielle, suivant un axe horizontal 9 parallèle à l'essieu. Elle coulisse sous le plateau dans un guide adapté 10, quelle que soit la technique choisie (glissière, chemin de roulement ou autre).

La benne, de construction classique, est constituée du plateau 3 et de ridelles démontables. Elle forme charnière en 11 avec le châssis articulé 5 et possède un guide 10 de l'articulation coulissante 2, un dispositif d'accrochage 12 de la flèche 1 et un ou plusieurs pieds pour l'adaptation en table, ainsi que l'accrochage d'une roue de secours.

**0 139 561**

La bielle 4 est articulée à ses extrémités suivant des axes 9 et 13 parallèles à l'essieu de la remorque. Elle relie l'articulation coulissante 2 et des éléments de châssis articulés 5.

Les éléments de châssis articulés 5, assemblés avec le train de roues, éventuellement par l'intermédiaire d'amortisseurs, forment charnière en 11 avec l'arrière du plateau 3. Ils sont articulés en 13 avec la bielle 4 et possèdent des blocs arrière 14, destinés à prendre appui au sol. Ils permettent entre autres la fixation de garde-boue, de la signalisation et l'accrochage d'un cric pour le changement de roue.

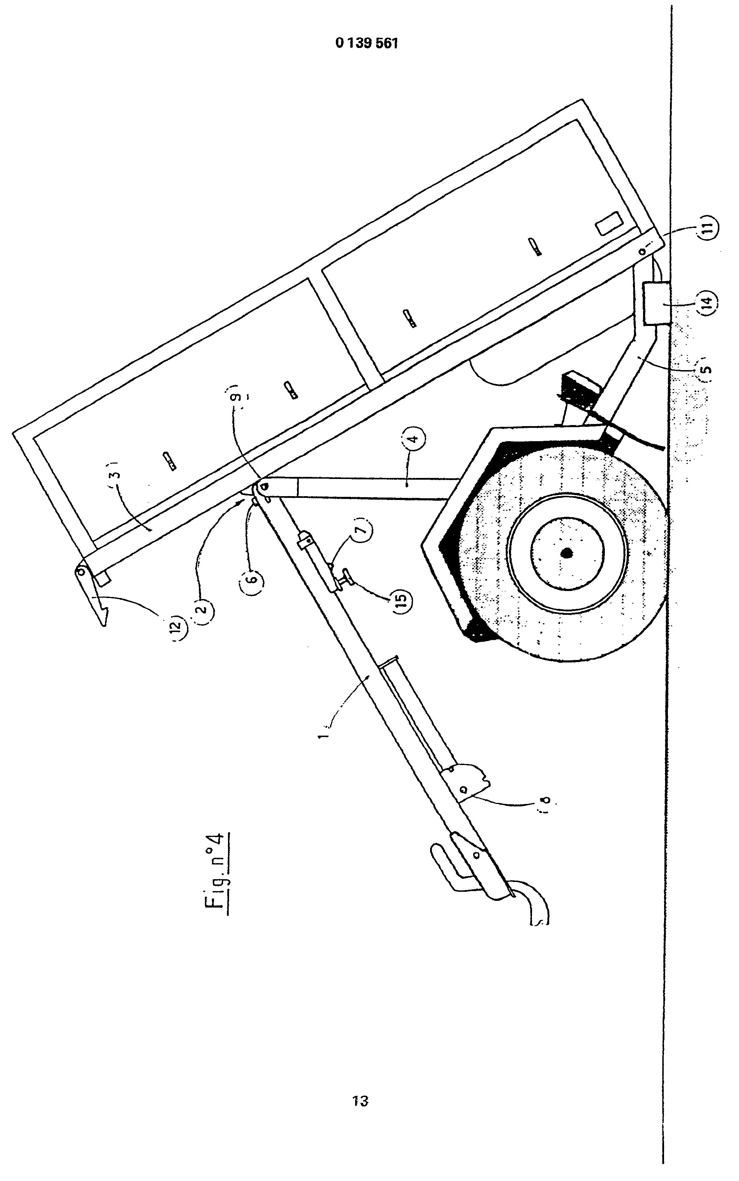

La figure 1 correspond à une position identique à celle de la figure 4, décrite ci-dessous, et met en évidence la glissière 10 non apparente sur les autres figures, de même que le détail des articulations.

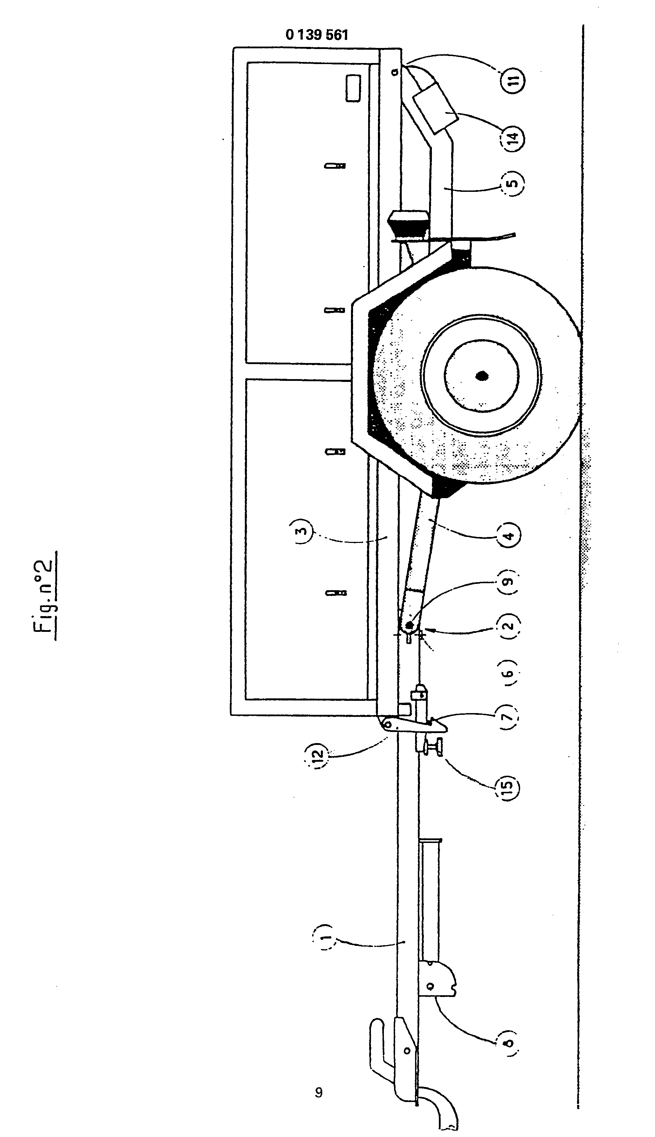

La figure 2 montre l'aspect tout à fait normal de cette remorque, en position route. Le moyen de basculement qui se trouve en dessous ne nuit en rien à son esthétique. L'articulation 2 se trouve en position avant dans la glissière 10 et la flèche 1 est accrochée en 7 par un verrou 12. On remarque un élément de réglage 15 qui limite ou annule le jeu de verrouillage. De même pour l'articulation coulissante 2 dont un système par excentrique entraîné par rotation de la flèche 1 autour de l'axe 9 supprime tout jeu parasite lors de l'utilisation en position route.

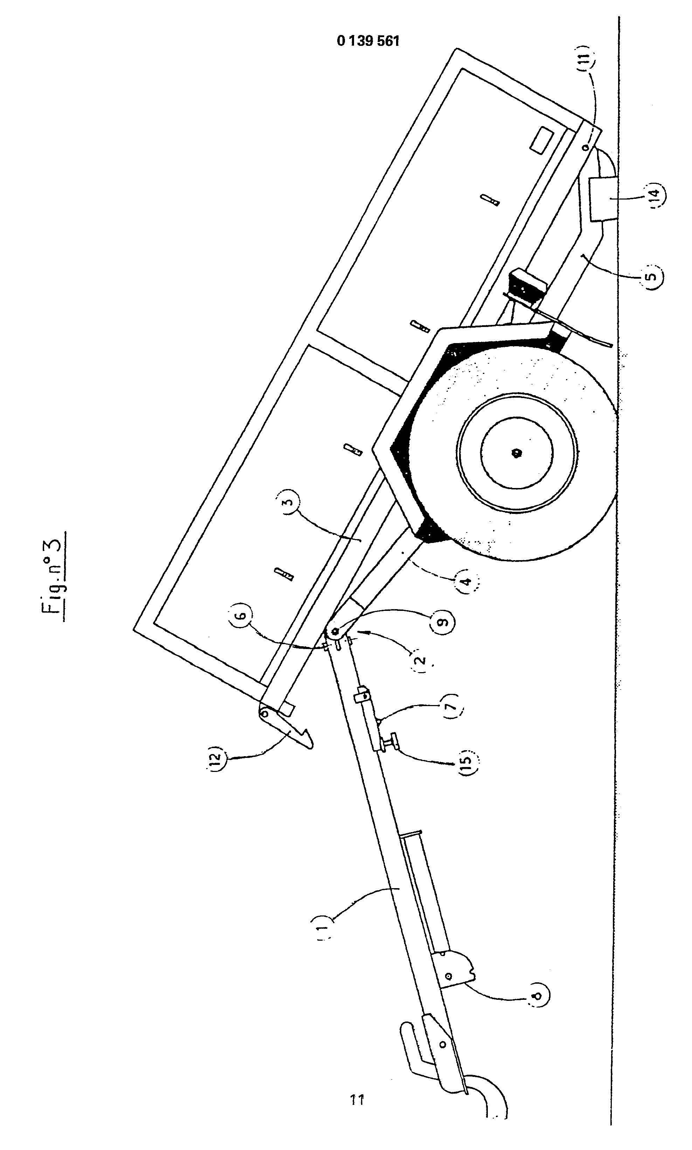

La figure 3 la représente en fin de première phase de fonctionnement, c'est-à-dire avec la flèche 1 décrochée de la benne par levage du crochet 12. Dans cette position, toute la charge repose en grande partie sur les deux roues, et aussi sur des blocs arrière d'appui 14 situés en dessous et à l'arrière des éléments de châssis 5. L'articulation coulissante 2 reste toujours en contact de la partie avant de la glissière 10.

La figure 4 représente cette même remorque alors que la deuxième phase de fonctionnement est en grande partie réalisée. Le véhicule tracteur a effectué la partie la plus contraignante de son travail en marche arrière. Ce que nous montre cette figure est l'un des détails les plus importants du fonctionnement, c'est-à-dire l'inclinaison de la flèche 1, qui est à ce moment précis à son maximum, la bielle 4 étant en position verticale après recul de l'articulation 2 dans la glissière 10.

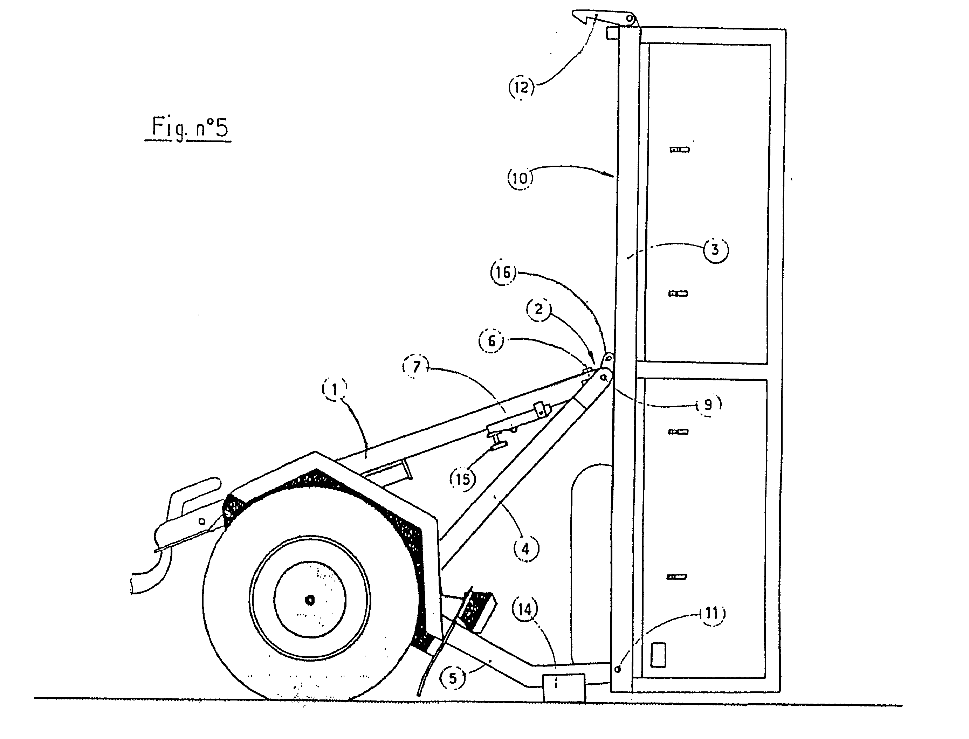

La figure 5 représente la remorque en fin de basculement, après recul du véhicule tracteur. Le plateau 3 est alors à la verticale et laisse apparaître le moyen de blocage de jeu par excentrique 16 solidaire de l'articulation coulissante 2. Cette dernière est en position arrière dans la glissière 10 du plateau 3. Le travail est effectué, il suffit d'avancer le véhicule tracteur et d'accrocher la flèche sous le plateau pour que la remorque soit de nouveau disponible.

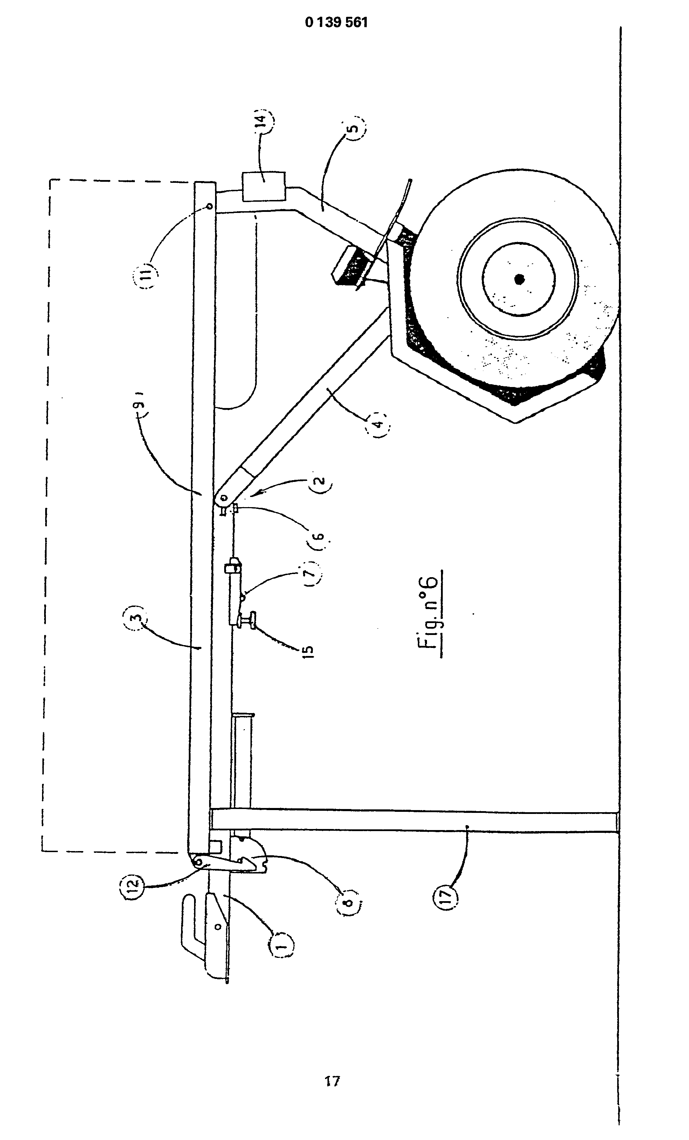

La figure 6 représente toujours la même remorque mais cette fois dans une position qui découle directement de celle représentée par la figure 5. En partant de cette dernière, il a suffi de remonter la flèche 1 sous le plateau 3, d'accrocher le verrou 12 au point d'accrochage avant 8 de la flèche, d'ajouter sous le plateau 3 un ou deux pieds 17 amovibles ou escamotables et de faire pivoter l'ensemble autour de l'axe des roues, pour obtenir cette disposition très avantageuse et applicable à la fonction de table, établi, échafaudage, etc.

Le fonctionnement, décrit plus en détail ci-dessous, comprend deux phases essentielles.

La première de ces phases consiste, après avoir démonté le hayon arrière, à décrocher la flèche 1 de la benne 3 par son verrou 12, et à exercer une traction manuelle sous celle-ci, afin de faire reposer l'arrière de la remorque au sol. Dans cette position, la remorque et sa charge reposent sur les deux roues, mais également sur les deux blocs arrière d'appui 14 situés à l'arrière et en dessous des éléments de châssis articulés 5. Ces blocs d'appui fixés au châssis et adhérant au sol rendent superflu le freinage des roues.

La deuxième phase de fonctionnement fait appel à l'énergie du véhicule tracteur en marche arrière. L'effort nécessaire au basculement étant bénéfiquement réduit par l'invention, ne nécessite aucun renforcement de l'attelage du véhicule, qui n'est ni plus, ni moins sollicité lors d'un remorquage normal.

Le recul du véhicule peut aller jusqu'en butée éventuelle contre les roues de la remorque, mais n'est nécessaire que pour le basculement de la benne, jusqu'à la position verticale. L'avantage de cette position verticale du plateau 3, dans le déversement de la charge, n'est point des moindres, puisqu'il rend celui-ci total, donc plus efficace.

Dans la position illustrée par la figure 6, le plateau 3 est horizontal mais à un niveau plus élevé que son niveau habituel en position de déplacement, de sorte qu'il convient à d'autres fonctions qu'il ne pouvait jouer jusqu'à présent, comme on l'a montré plus haut.

**Revendications**

1. Remorque à roues ayant un plateau (3), une flèche (1) réunie au plateau (3), un châssis (4, 5) reliant les roues au plateau (3), dans laquelle la flèche (1) est articulée autour d'un axe horizontal (9) qui est parallèle à un axe transversal passant par les roues et qui est monté coulissant par rapport au plateau (3) dans le sens longitudinal de ce dernier, cette flèche (1) étant pourvue d'un crochet de blocage (12), caractérisée en ce que le châssis comprend au moins une bielle (4) et des éléments de châssis (5) espacés en sens transversal, la bielle (4) étant articulée par une première extrémité avec la flèche (1) autour de l'axe horizontal (9) et par sa seconde extrémité avec lesdits éléments de châssis (5) autour d'un axe transversal (13) parallèle à l'axe horizontal (9) d'articulation de la flèche (1) avec la bielle (4), ces éléments de châssis (5) s'étendant entre un essieu passant par les roues et la partie extrême arrière du plateau (3) et étant articulés à la fois d'une part autour dudit essieu et d'autre part autour d'un axe transversal (11) à leur jonction avec le plateau (3).

2. Remorque selon la revendication 1, caractérisée en ce que lesdits éléments de châssis (5) sont articulés autour d'un même essieu passant par les roues et l'axe transversal (13) d'articulation de la bielle (4) avec lesdits éléments de châssis (5) est distinct de cet essieu et s'étend entre les éléments de châssis (5).

3. Remorque selon la revendication 1, caractérisée en ce que l'essieu passant par les roues et l'axe transversal (13) d'articulation de la bielle (4) avec lesdits éléments de châssis (5) sont confondus et cet essieu constitue aussi ledit axe transversal (13).

4. Remorque selon la revendication 2, caractérisée en ce que les roues sont des roues indépendantes sans essieu commun et l'axe transversal (13) d'articulation de la bielle (4) avec lesdits éléments de châssis (5) s'étend entre ces derniers en dehors de l'axe géométrique passant par le centre des roues.

5. Remorque selon la revendication 1, caractérisée en ce qu'elle comprend deux bielles (4) articulées en correspondance chacune avec un élément de châssis (5).

6. Remorque selon l'une quelconque des revendications 1 à 5, caractérisée en ce que les éléments de châssis (5) sont munis à proximité de l'axe d'articulation transversal (11) avec le plateau (3) de blocs arrière (14) destinés à reposer sur le sol quand le plateau (3) est mis en position de basculement substantiellement verticale.

7. Remorque selon la revendication 1, caractérisée en ce que la course de coulissement de l'axe horizontal coulissant (9) est telle qu'elle comprend un point où le plateau (3) est soulevé sensiblement en position horizontale au-dessus du sol par les roues se trouvant dans sa partie arrière et il existe dans la partie avant du plateau (3) au moins un pied (17) amovible ou escamotable destiné à soutenir ladite partie avant du plateau (3).

8. Remorque selon l'une quelconque des revendications 1 à 7, caractérisée en ce que le crochet de blocage (12) et l'axe horizontal coulissant (9) sont associés chacun à un moyen de limitation ou de suppression du jeu pendant l'utilisation sur route.

## Patentansprüche

1. Anhänger auf Rädern mit einer Plattform (3), einer mit der Plattform verbundenen Deichsel (1), einem die Räder mit der Plattform (3) verbindenden Fahrgestell (4, 5), bei dem die Deichsel um eine horizontale Achse (9) gelenkig beweglich ist, die parallel zu einer durch die Räder verlaufenden Querachse und bezüglich der Plattform (3) in Längsrichtung der letzteren gleitverschieblich angeordnet ist, wobei diese Deichsel (1) mit einem Verriegelungshaken (12) versehen ist, dadurch gekennzeichnet, dass das Fahrgestell wenigstens eine Triebstange (4) und in Querrichtung mit Zwischenraum angeordnete Fahrgestellelemente (5) umfasst, dass die Triebstange (4) an einem ersten Ende mit der Deichsel (1) um die horizontale Achse (9) und durch ihr zweites Ende mit den Fahrgestellelementen um eine zur horizontalen Gelenkachse (9) zwischen Deichsel (1) und Triebstange (4) parallelen Querachse (13) gelenkig verbunden ist, und dass sich die Fahrgestellelemente (5) zwischen einer durch die Räder verlaufenden Achse und dem rückwärtigen Endteil der Plattform erstrecken und gleichzeitig einerseits um diese Achse und andererseits um eine Querachse (11) gelenkig beweglich sind, die ihrer Verbindung mit der Plattform (3) dient.

2. Anhänger nach Anspruch 1, dadurch gekennzeichnet, dass die Fahrgestellelemente (5) um eine selbe, durch die Räder verlaufende Radachse gelenkig beweglich sind, und dass die Querachse (13) zur Anlenkung der Triebstange (4) an die Fahrgestellelemente von dieser Radachse von dieser verschieden ist und zwischen den Fahrgestellelementen (5) verläuft.

3. Anhänger nach Anspruch 1, dadurch gekennzeichnet, dass die durch die Räder verlaufende Achse und die Querachse (13) zur Anlenkung der Triebstange (4) an die Fahrgestellelemente (5) zusammenfallen und diese Achse auch die Querachse (13) darstellt.

4. Anhänger nach Anspruch 2, dadurch gekennzeichnet, dass die Räder unabhängige Räder ohne gemeinsame Radachse sind, und die Querachse (13) zur Anlenkung der Triebstange (4) an die Fahrgestellelemente (5) zwischen diesen letzteren ausserhalb der geometrischen, durch die Mitte der Räder verlaufenden Achse verläuft.

5. Anhänger nach Anspruch 1, dadurch gekennzeichnet, dass er zwei Triebstangen (4) umfasst, von denen eine jede entsprechend mit einem Fahrgestellelement (5) gelenkig verbunden ist.

6. Anhänger nach einem der Ansprüche 1 bis 5, dadurch gekennzeichnet, dass die Fahrzeugelemente (5) in der Nähe der Querachse (11) zur Gelenkverbindung mit der Plattform (3) mit rückwärtigen Blöcken (4) versehen sind, die dazu dienen, auf den Boden aufzuruhen, wenn die Plattform (3) in eine im wesentlichen senkrechte Schwenkstellung gebracht ist.

7. Anhänger nach Anspruch 1, dadurch gekennzeichnet, dass die Gleitverschiebungsbahn der horizontal gleitverschieblichen Achse (9) derart ist, dass sie einen Punkt umfasst, an dem die Plattform (3) im wesentlichen in horizontaler Position durch die Räder über dem Boden abgestützt ist, die sich in ihrem rückwärtigen Teil befinden, und dass ihm vorderen Teil der Plattform (3) wenigstens ein unbeweglicher oder ausziehbarer Fuss (17) vorliegt, der dazu dient, den vorderen Teil der Plattform (3) abzustützen.

8. Anhänger nach einem der Ansprüche 1 bis 7, dadurch gekennzeichnet, dass der Verriegelungshaken (12) und die horizontale, gleitverschiebliche Achse (9) jeweils mit einem Mittel zur Begrenzung oder Unterdrückung des Spiels während des Strasseneinsatzes versehen sind.

## Claims

1. A wheeled trailer which has a platform (3), a pole (1) joined to the platform (3), and a frame (4, 5) connecting the wheels to the platform (3), and in which the pole (1) is hinged about a horizontal shaft (9) which is parallel with a transverse shaft passing through the wheels and which is mounted to slide with respect to the platform (3) in the direction longitudinal to the latter, the said pole (1) being provided with a locking-hook (12), characterised in that the frame includes at least one connecting-rod (4) and frame members (5) spaced apart in the transverse direction, the connecting-rod (4) being hinged by one first end to the pole (1) about the horizontal shaft (9) and by the second end of it to the said frame members (5) about a transverse shaft (13) parallel with the horizontal shaft (9) higeing the pole (1) to the connection-rod (4), the said frame members (5) extending between an axle passing through the wheels and the rear end portion of the platform (3) and being hinged at the same time firstly about the said axle and secondly about a transverse shaft (11) where they meet the platform (3).

2. A trailer as in Claim 1, characterised in that the said frame members (5) are hinged about one and the same axle passing through the wheels and the transverse shaft (13) hingeing the connecting-rod (4) to the said frame members (5) is distinct from the said axle and extends between the frame members (5).

3. A trailer as in Claim 1, characterised in that the axle passing through the wheels and the transverse shaft (13) hingeing the connecting-rod (4) to the said frame members (5) coincide and the said axle also forms the said transverse shaft (13).

4. A trailer as in Claim 2, characterised in that the wheels are independent wheels without a common axle and the transverse shaft (13) hingeing the connecting rod (4) to the said frame members (5) extends between the latter outside the geometric axis passing through the centres of the wheels.

5. A trailer as in Claim 1, characterised in that it includes two connecting-rods (4) hinged correspondingly, each to one frame member (5).

6. A trailer as in any one of the Claims 1 to 5, characterised in that the frame members (5) are equipped close to the transverse shaft (11) hingeing them to the platform (3) with rear blocks (14) intended for resting on the ground when the platform (3) is placed in a substantially vertical position of tilt.

7. A trailer as in Claim 1, characterised in that the length of slide of the sliding horizontal shaft (9) is such that it includes one point at which the platform (3) is raised substantially into a horizontal position above the ground by the wheels lying at the rear portion of it and at the front portion of the platform (3) there is at least one removable or retractable foot (17) intended for supporting the said front portion of the platform (3).

8. A trailer as in any one of the Claims 1 to 7, characterised in that the locking-hook (12) and the sliding horizontal shaft (9) are associated each with a means of limitation or suppression of the play during use on the road.

Fig. n° 1

Fig. n°2

0 139 561

# Fig. n° 3

0 139 561

Fig. n°4

Fig. n°5

Fig. n°6